# EUROPÄISCHE PATENTSCHRIFT

(11) **EP 2 106 932 B1**
(45) Veröffentlichungstag und Bekanntmachung des Hinweises auf die Patenterteilung: **18.04.2012**
(21) Anmeldenummer: 09002974.5
(22) Anmeldetag: 03.03.2009
(51) Int. Cl.: B60C 23/04

(54) **Reifendruckkontrollsystem**
Tyre pressure control system
Système de contrôle de la pression des pneus

(30) Priorität: 04.04.2008 DE 102008017982
(43) Veröffentlichungstag der Anmeldung: 07.10.2009
(73) Patentinhaber: Huf Hülsbeck & Fürst GmbH & Co. KG, 42551 Velbert (DE)
(72) Erfinder: Maier, Uli, 74336 Brackenheim-Hausen (DE); Braun, Mark, 75015 Bretten-Gölshausen (DE)
(74) Vertreter: Twelmeier Mommer & Partner

(56) Entgegenhaltungen:
- WO-A-03/061995
- FR-A- 2 890 601
- US-A1- 2007 252 685

## Beschreibung

Die Erfindung geht aus von einem Reifendruckkontrollsystem mit den im Oberbegriff des Anspruchs 1 angegebenen Merkmalen. Ein derartiges Reifendruckkontrollsystem ist aus der US 2007/252685 A1 bekannt.

Zu einem derartigen Reifendruckkontrollsystem gehören Radelektroniken, die in den Luftreifen eines Fahrzeugs anzuordnen sind. Die Radelektroniken enthalten einen Drucksensor zum Messen des Reifendrucks oder einer Druckänderung und einen Sender zum Senden von Druckinformationen. Die Druckinformationen werden von einem im oder am Fahrzeug angeordneten Empfänger des Reifendruckkontrollsystems empfangen und von einem Steuergerät ausgewertet. Bei dem bekannten System ist jedem Rad ein Empfänger zugeordnet, der über eine eigene Datenleitung mit dem Steuergerät verbunden ist. Empfängt ein Empfänger eine kritische Druckinformation, leitet er diese sofort über seine Datenleitung an das Steuergerät weiter.

In einem Luftreifen eines Fahrzeugs kann einerseits ein langsamer, schleichender Druckverlust auftreten, so dass die Geschwindigkeit, mit der eine aktuelle Druckinformation vom Steuergerät erfasst werden kann, weitgehend unkritisch ist. Andererseits kann in einem Luftreifen aber auch ein schneller Druckabfall, beispielsweise wegen eines platzenden Reifens, auftreten. Solche kritischen Druckinformationen sollten dem Steuergerät möglichst schnell zur Verfügung gestellt werden.

Aufgabe der Erfindung ist es deshalb, einen Weg aufzuzeigen, wie die Kommunikation zwischen Empfänger und Steuergerät vorteilhaft geregelt und kritische Druckinformationen dem Steuergerät schnell zur Verfügung gestellt werden können.

Diese Aufgabe wird durch ein Reifendruckkontrollsystem mit den im Anspruch 1 angegebenen Merkmalen gelöst. Vorteilhafte Weiterbildungen der Erfindung sind Gegenstand der Unteransprüche.

Bei einem erfindungsgemäßen Reifendruckkontrollsystem ist der Empfänger nicht nur über das serielle Bussystem mit dem Steuergerät verbunden, sondern zusätzlich auch über eine von dem seriellen Bussystem separate Datenleitung. Über diese Datenleitung meldet der Empfänger dem Steuergerät unaufgefordert kritische Druckinformationen.

Bei seriellen Bussystemen kann der Empfänger nämlich nur dann Informationen an das Steuergerät liefern, wenn er von dem Steuergerät abgefragt wird. Nach dem Erhalt einer kritischen Druckinformation kann deshalb beträchtliche Zeit vergehen, bis der Empfänger wieder von dem Steuergerät abgefragt wird und dadurch die Berechtigung erhält, über das Bussystem Informationen zu dem Steuergerät zu übertragen. Durch eine von dem seriellen Bussystem separate Datenleitung zwischen dem Empfänger und dem Steuergerät lässt sich diese Wartezeit vermeiden, so dass kritische Druckinformationen von dem Empfänger unverzüglich an das Steuergerät weitergeleitet werden können. Vorteilhaft kann so bei einem erfindungsgemäßen Reifendruckkontrollsystem eine kritische Druckinformation dem Steuergerät sehr schnell, beispielsweise innerhalb von wenigen Millisekunden, zur Verfügung gestellt werden.

Da ein kritischer Druckabfall nur sehr selten vorkommt, können bei einem erfindungsgemäßen Drucksystem die Vorteile des Bussystems, nämlich einer geregelten Kommunikation zwischen dem Empfänger und dem Steuergerät, im normalen Betrieb genutzt werden. Die von dem Bussystem separate Datenleitung wird nur in seltenen Ausnahmesituationen genutzt, nämlich wenn die Radelektronik eine kritische Druckinformation übermittelt.

Bevorzugt hat das Steuergerät einen Anschluss für einen Fahrzeugbus zur Ausgabe ausgewerteter Druckinformationen. Auf diese Weise kann das Steuergerät einem oder mehreren Fahrsicherheitssystemen des Fahrzeugs, beispielsweise einer elektronischen Stabilitätskontrolle und/oder einem Antiblockiersystem, Auswertungsergebnisse über einen Fahrzeugbus zur Verfügung stellen. Bei einem kritischen Zustand, wie einem platzenden Reifen, können derartige Systeme in kürzester Zeit eingreifen und gefährliche Situationen, beispielsweise ein Schleudern des Fahrzeugs, entschärfen oder vermeiden.

Eine vorteilhafte Weiterbildung der Erfindung sieht vor, dass die Radelektronik eine Auswerteeinheit enthält, die im Betrieb aus Signalen des Drucksensors die Druckinformationen ermittelt und nach gespeicherten Kriterien entscheidet, ob die ermittelte Druckinformation kritisch ist. Als Kriterien können ein kritischer Schwellenwert für einen Druckabfall in einem vordefinierten Zeitintervall, beispielsweise zur vorhergehenden Messung, vorgeben sein. Wird dieser kritische Schwellenwert unterschritten, ist die vorliegende Druckinformation kritisch und indiziert beispielsweise ein Platzen des Luftreifens. Vorzugsweise erhöht die Auswerteeinheit bei Feststellen einer kritischen Druckinformation die Senderate, mit der Druckinformationen gesendet werden. Der Empfänger kann eine kritische Druckinformation an der erhöhten Senderate erkennen. Möglich ist es aber auch, dass die Radelektronik eine kritische Druckinformation mit einer besonderen Kennzeichnung sendet, an welcher der Empfänger erkennt, dass die empfangene Druckinformation unaufgefordert über die Datenleitung zu dem Steuergerät zu übertragen ist.

Bevorzugt werden Druckinformationen von der Radelektronik als Teil eines Datentelegramms gesendet. Ein derartiges Datentelegramm kann neben der eigentlichen Druckinformation zusätzlich ein Bit oder eine Bitfolge enthalten, um die Druckinformation als kritisch zu kennzeichnen. Ein derartiges Datentelegramm kann zusätzlich eine charakteristische Kennung enthalten, mittels welcher das Steuergerät die Druckinformation dem betreffenden Luftreifen des Fahrzeugs zuordnen kann.

Weitere Einzelheiten und Vorteile der Erfindung werden an einem Ausführungsbeispiel unter Bezugnahme auf die beigefügten Zeichnungen erläutert. Es zeigen:
- Figur 1:: eine schematische Darstellung eines Ausführungsbeispiels eines erfin- dungsgemäßen Reifendruckkontrollsystems; und
- Figur 2:: Verbindungen zwischen Empfänger und Steuergerät.

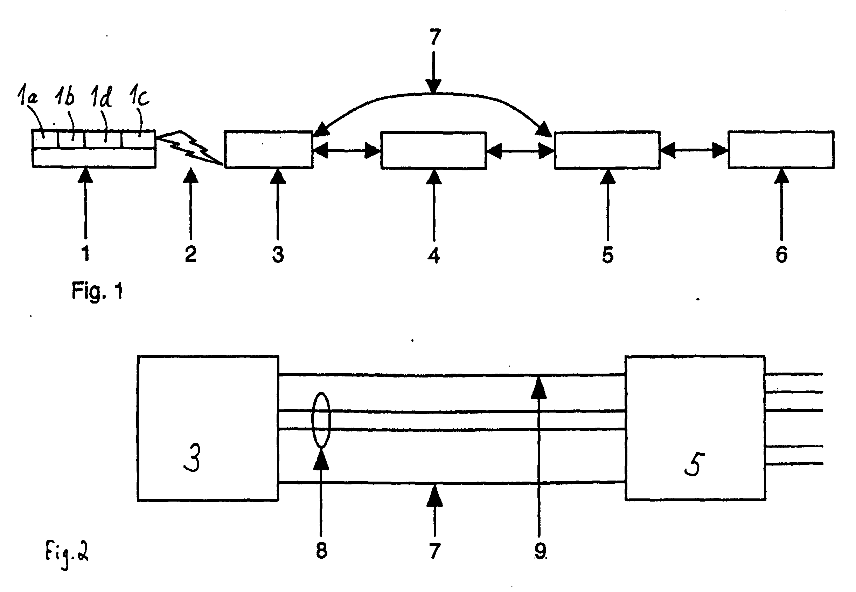

Figur 1 zeigt schematisch ein Reifendruckkontrollsystem mit einer in einem Luftreifen eines Fahrzeugs angeordneten Radelektronik 1, die eine Batterie 1a als Stromquelle, einen Drucksensor 1b zum Messen des Reifendrucks oder einer Druckänderung und einen Sender 1 c zum Senden von Druckinformationen aufweist. Druckinformationen werden von der Radelektronik 1 drahtlos über eine Funkstrecke 2 zu einem im oder am Fahrzeug angeordneten Empfänger 3 übertragen. Bei dem dargestellten Ausführungsbeispiel hat das Reifendruckkontrollsystem nur einen einzigen, zentralen Empfänger 3, der Signale von Radelektroniken in allen Luftreifen des Fahrzeugs empfängt. Möglich ist es aber beispielsweise auch, dass jeder Achse oder sogar jedem Luftreifen des Fahrzeugs ein separater Empfänger 3 zugeordnet ist.

Der Empfänger 3 ist über ein serielles Bussystem 4, bevorzugt ein Master-Slave Bussystem, mit einem Steuergerät 5, das die Druckinformationen auswertet, verbunden. Über das Master-Slave Bussystem 4 fragt das Steuergerät 5 den Empfänger 3 ab. Der Empfänger 3 überträgt als Antwort auf eine Abfrage eine empfangene Druckinformation über das Master-Slave Bussystem 4 zu dem Steuergerät 5.

Der Empfänger 3 ist mit dem Steuergerät 5 zusätzlich über eine von dem Bussystem 4 separate Datenleitung 7 verbunden, über die der Empfänger 3 dem Steuergerät 5 unaufgefordert kritische Druckinformationen meldet. Auf diese Weise können dem Steuergerät 5 kritische Druckinformationen, beispielsweise ein schneller Druckabfall, wie er bei einem platzenden Reifen auftritt, wesentlich schneller zur Verfügung gestellt werden. Bei einer Übertragung ausschließlich über ein Master-Slave Bussystem kann nämlich zwischen dem Empfang einer kritischen Druckinformation durch den Empfänger 3 und dem nächsten Abfragen des Empfängers 3, also der nächsten Übertragung über das Bussystem, eine geraume Zeit vergehen. Diese Wartezeit entfällt bei einer unaufgeforderten Übertragung kritischer Druckinformationen über die separate Datenleitung 7.

Wegen der Datenleitung 7 können kritische Druckinformationen frühzeitig von dem Steuergerät 5 ausgewertet und Auswertungsergebnisse über einen Fahrzeugbus 6, beispielsweise einen CAN Bus, einem oder mehreren Fahrsicherheitssystemen zur Verfügung gestellt werden. Beispielsweise kann eine elektronische Stabilitätskontrolle ein Antiblockiersystem des Fahrzeugs unter Verwendung der über den Fahrzeugbus 6 von dem Steuergerät 5 zur Verfügung gestellten Auswertungsergebnisse der kritischen Druckinformation steuern, um ein Schleudern des Fahrzeugs zu verhinderen. Indem Daten über einen kritischen Druckabfall innerhalb von wenigen Millisekunden auf dem Fahrzeugbus 6 zur Verfügung stehen können gefährliche Situationen so vermieden oder entschärft werden

Die Radelektronik 1 enthält eine Auswerteeinheit 1d, die im Betrieb aus Signalen des Drucksensors 1a die zu sendenden Druckinformationen ermittelt und nach gespeicherten Kriterien entscheidet, ob die ermittelte Druckinformation kritisch ist. Die gespeicherten Kriterien können beispielsweise einen kritischen Schwellenwert für den Druckabfall in einem definierten Zeitintervall vorgeben.

Stellt die Auswerteeinheit 1d der Radelektronik 1 eine kritische Druckinformation fest, wird die Senderate, mit der Druckinformationen gesendet werden, erhöht. Prinzipiell kann der Empfänger 3 eine kritische Druckinformation an der erhöhten Senderate als kritisch erkennen. Bei dem dargestellten Ausführungsbeispiel sendet die Radelektronik 1 eine kritische Druckinformation jedoch mit einer besonderen Kennzeichnung, an welcher der Empfänger 3 erkennt, dass die empfangene Druckinformation kritisch und deshalb über die Datenleitung 7 zu übertragen ist.

Die Druckinformation wird als ein Datentelegramm übertragen, das neben der Druckinformation ein Bit oder eine Bitfolge als Kennzeichnung enthält, an welcher der Empfänger 3 erkennt, ob die Druckinformation kritisch ist. Zusätzlich kann das Datentelegramm eine charakteristische Kennung enthalten, an der das Steuergerät 5 erkennen kann, zu welchem Luftreifen des Fahrzeugs die Druckinformation des Datentelegramms gehört.

Figur 2 zeigt schematisch die Verbindungen zwischen Steuergerät 5 und Empfänger 3. Der Empfänger 3 und das Steuergerät 5 sind über Datenleitungen 9 des Master-Slave Bussystems 4 sowie Leitungen 8 zur Spannungsversorgung des Empfängers 3 verbunden. Zusätzlich ist der Empfänger 3 über die separate Datenleitung 7, über welche er unaufgefordert kritische Druckinformationen überträgt, an das Steuergerät 5 angeschlossen.

### Bezugszahlen

- 1: Radelektronik
- 1a: Batterie
- 1b: Drucksensor
- 1c: Sender
- 1d: Auswerteeinheit
- 2: Funkstrecke
- 3: Empfänger
- 4: serielles Bussystem
- 5: Steuergerät
- 6: Fahrzeugbus
- 7: Datenleitung
- 8: Leitungen zur Spannungsversorgung
- 9: Datenleitungen

## Patentansprüche

1. Reifendruckkontrollsystem mit
einer in einem Luftreifen anzuordnenden Radelektronik (1), die eine Batterie (1 a) als Stromquelle, einen Drucksensor (1 b) zum Messen des Reifendrucks oder einer Druckänderung und einen Sender (1c) zum Senden von Druckinformationen aufweist,
einem Steuergerät (5) zum Auswerten von Druckinformationen, und
einem im oder am Fahrzeug anzuordnenden Empfänger (3) zum Empfang von gesendeten Druckinformationen, der über eine Datenleitung mit dem Steuergerät (5) verbunden ist,
**dadurch gekennzeichnet, dass**
der Empfänger (3) mit dem Steuergerät (5) über ein serielles Bussystem (4) verbunden ist, über welches im Betrieb das Steuergerät (5) den Empfänger (3) abfragt und über welches das Steuergerät (5) daraufhin von dem Empfänger (3) eine empfangene Druckinformation erhält, und
der Empfänger (3) mit dem Steuergerät (5) zusätzlich auch über eine von dem seriellen Bussystem (4) separate Datenleitung (7) verbunden ist, über die der Empfänger (3) dem Steuergerät (5) unaufgefordert kritische Druckinformationen meldet.

2. Reifendruckkontrollsystem nach Anspruch 1, **dadurch gekennzeichnet, dass** die kritische Druckinformation ein schneller Druckabfall ist, der ein Platzen des Luftreifens indiziert.

3. Reifendruckkontrollsystem nach einem der vorstehenden Ansprüche, **dadurch gekennzeichnet, dass** das serielle Bussystem (4) ein Master-Slave Bussystem ist.

4. Reifendruckkontrollsystem nach einem der vorstehenden Ansprüche, **dadurch gekennzeichnet, dass** die Radeelektronik (1) eine Auswerteeinheit (1d) enthält, die im Betrieb aus Signalen des Drucksensors (1 b) die zu sendenden Druckinformationen ermittelt und nach gespeicherten Kriterien entscheidet, ob die ermittelte Druckinformation kritisch ist.

5. Reifendruckkontrollsystem nach Anspruch 4, **dadurch gekennzeichnet, dass** die Auswerteeinheit (1d) bei Feststellen einer kritischen Druckinformation die Senderate, mit der Druckinformationen gesendet werden, erhöht.

6. Reifendruckkontrollsystem nach Anspruch 5, **dadurch gekennzeichnet, dass** der Empfänger (3) eine kritische Druckinformation an der erhöhten Senderate erkennt.

7. Reifendruckkontrollsystem nach einem der Ansprüche 4 bis 6, **dadurch gekennzeichnet, dass** die Radelektronik (1) eine kritische Druckinformation mit einer besonderen Kennzeichnung sendet, an welcher der Empfänger (3) erkennt, dass die empfange Druckinformation über die Datenleitung (7) zu übertragen ist.

8. Reifendruckkontrollsystem nach einem der vorstehenden Ansprüche, **dadurch gekennzeichnet, dass** der Empfänger (3) ein zentraler Empfänger zum Empfang von Druckinformationen von mehreren Radelektroniken (1) ist.

9. Reifendruckkontrollsystem nach einem der vorstehenden Ansprüche, **dadurch gekennzeichnet, dass** das Steuergerät (5) einen Anschluss für einen Fahrzeugbus (6) zur Ausgabe ausgewerteter Druckinformationen hat.

10. Fahrzeug mit einem Reifendruckkontrollsystem nach Anspruch 9, **dadurch gekennzeichnet, dass** von dem Steuergerät (5) eine Information über einen kritischen Druckabfall über den Fahrzeugbus (6) einem Fahrsicherheitssystem zur Verfügung gestellt wird.

11. Fahrzeug nach Anspruch 10, **dadurch gekennzeichnet, dass** ein Antiblockiersystem des Fahrzeugs unter Berücksichtung einer von dem Steuergerät (5) über den Fahrzeugbus (6) ausgegebene Information über einen kritischen Druckabfall gesteuert wird.

12. Fahrzeug nach Anspruch 11, **dadurch gekennzeichnet, dass** das Antiblockiersystem unter Verwendung einer von dem Steuergerät (5) über den Fahrzeugbus (6) ausgegebene Information von einer elektronischen Stabilitätskontrolle gesteuert wird.

## Claims

1. A tire pressure monitoring system with
a wheel electronic (1) to be installed in a pneumatic tire, the wheel electronic comprising a battery (1a) as power source, a pressure sensor (1b) for measuring of tire pressure or pressure change, and a transmitter (1c) for transmitting pressure data,
a control unit (5) for evaluating of pressure data, and
a receiver (3) to be mounted either in or at the vehicle for the receiving of transmitted pressure data,
**characterized in that**
the receiver (3) is connected to the control unit (5) by a serial bus system (4) via which, during operation, the control unit (5) interrogates the receiver (3) and receives subsequently pressure data from the receiver (3), and that
the receiver (3) is connected to the control unit (5) additionally also by a data transfer line (7) that is separate from the serial bus system (4) and via which the receiver (3) notifies the control unit (5) of critical pressure data in an unrequested manner.

2. A tire pressure monitoring system according to claim 1, **characterized in that** the critical pressure data is a rapid pressure drop, which indicates a tire blowout.

3. A tire pressure monitoring system according to any of above claims, **characterized in that** the serial bus system (4) is a master-slave bus system.

4. A tire pressure monitoring system according to any of above claims, **characterized in that** the wheel electronic (1) comprises an evaluation unit (1d) which in operation gathers from the signals of the pressure sensor (1b) the pressure data to be transmitted and decides according to stored criteria whether the gathered pressure data is critical.

5. A tire pressure monitoring system according to claim 4, **characterized in that** the evaluation unit (1d), when detecting critical pressure data, increases the transmission rate at which the pressure data are sent.

6. A tire pressure monitoring system according to claim 5, **characterized in that** the receiver (3) recognizes critical pressure data on account of increased transmission rate.

7. A tire pressure monitoring system according to any of the claims 4 to 6, **characterized in that** the wheel electronic (1) transmits critical pressure data with a special identifier, by means of which the receiver (3) recognizes that received pressure data is to be sent by the data transfer line (7).

8. A tire pressure monitoring system according to any of above claims, **characterized in that** the receiver (3) is a central receiver for receiving pressure data from several wheel electronics (1).

9. A tire pressure monitoring system according to any of above claims, **characterized in that** the control unit (5) is provided with a connection for a vehicle bus (6) for outputting processed pressure data.

10. A vehicle with a tire pressure monitoring system according to claim 9, **characterized in that** the control unit (5) provides a vehicle safety system with information regarding a critical pressure drop via the vehicle bus (6).

11. A vehicle according to claim 10, **characterized in that** an anti-lock braking system of the vehicle is controlled with consideration of information about a critical pressure drop sent by the control unit (5) via the vehicle bus (6).

12. A vehicle according to claim 11, **characterized in that** the anti-lock braking system is controlled by an electronic stability control system using information sent by the control unit (5) via the vehicle bus (6).

## Revendications

1. Système de contrôle de pression des pneumatiques comportant une électronique de roue (1) à installer dans un pneumatique, présentant une batterie (1a) comme source de courant, un capteur de pression (1 b) pour mesurer la pression du pneu ou un changement de pression de même qu'un émetteur (1 c) pour envoyer les informations de pression,
un appareil de commande (5) pour interpréter les informations de pression et un récepteur (3) à installer dans ou sur le véhicule, pour recevoir les informations de pression envoyées, lequel récepeur est relié à l'appareil de commande (5) par un circuit de données, **caractérisé en ce que** le récepteur (3) est relié à l'appareil de commande (5) par un système de bus en série (4), par l'intermédiaire duquel en service l'appareil de commande (5) interroge le récepteur (3) et par l'intermédiaire duquel l'appareil de commande (5) obtient ensuite du récepteur (3) une information de pression reçue, et
le récepteur (3) est relié à l'appareil de commande (5) en outre par un circuit de données (7) séparé du système de bus en série (4), par l'intemédiaire duquel le récepteur (3) signale automatiquement à l'appareil de commande (5) les informations de pression critiques.

2. Système de contrôle de pression des pneumatiques selon la revendication 1, **caractérisé en ce que** l'information de pression critique est une rapide baisse de pression indiquant que le pneu est crevé.

3. système de contrôle de pression des pneumatiques selon l'une des revendications précédentes, **caractérisé en ce que** le système de bus en série (4) est un système de bus de type maître-esclave.

4. système de contrôle de pression des pneumatiques selon l'une des revendications précédentes, **caractérisé en ce que** l'électronique de roue (1) contient une unité d'interprétation (1d), qui en service recherche à partir des signaux du capteur de pression (1 b) les informations de pression à envoyer et détermine selon des critères en mémoire, si l'information de pression obtenue est critique.

5. Système de contrôle de pression des pneumatiques selon la revendication 4, **caractérisé en ce que** l'unité d'interprétation (1 d), en cas de constatation d'une information de pression critique, augmente le débit d'émission avec lequel les informations de pression sont envoyées.

6. Système de contrôle de pression des pneumatiques selon la revendication 5, **caractérisé en ce que** le récepteur (3) reconnaît une information de pression critique à son débit d'émission accéléré.

7. Système de contrôle de pression des pneumatiques selon l'une des revendications 4 à 6, **caractérisé en ce que** l'électronique de roue (1) envoie une information de pression critique avec un identificateur particulier, auquel le récepteur (3) reconnaît qu'il doit transmettre l'information de pression reçue par l'intermédiaire du circuit de données (7).

8. Système de contrôle de pression des pneumatiques selon l'une des revendications précédentes, **caractérisé en ce que** le récepteur (3) est un récepteur central permettant de recevoir les informations de pression de plusieurs électroniques de roue (1).

9. Système de contrôle de pression des pneumatiques selon l'une des revendications précédentes, **caractérisé en ce que** l'appareil de commande (5) dispose d'une connexion pour bus de véhicule (6) pour la sortie d'informations de pression interprétées.

10. Système de contrôle de pression des pneumatiques selon la revendication 9, **caractérisé en ce que** l'appareil de commande (5) fournit à un système de sécurité du véhicule une information sur une baisse de pression critique par l'intermédiaire du bus de véhicule (6).

11. Véhicule selon la revendication 10, **caractérisé en ce qu'**un système antiblocage du véhicule est sollicité en fonction d'une information sur une baisse de pression critique, transmise par l'appareil de commande (5) par l'intermédiaire du bus de véhicule (6).

12. Véhicule selon la revendication 11, **caractérisé en ce que** le système antiblocage est commandé par un système de stabilisation électronique en fonction d'une information transmise par l'appareil de commande (5) par l'intermédiaire du bus de véhicule (6).
